# EUROPEAN PATENT SPECIFICATION

(11) **EP 4 606 707 B1**
(45) Date of publication and mention of the grant of the patent: **04.11.2026**
(21) Application number: 25157123.8
(22) Date of filing: 11.02.2025
(51) Int. Cl.: B64D 13/06

(54) **ENVIRONMENTAL CONTROL SYSTEMS FOR AN AIRCRAFT HAVING A VAPOR COMPRESSION SYSTEM WITH A FLASH LIQUID EXPANDER TURBINE**
KLIMAREGELUNGSSYSTEM FÜR EIN FLUGZEUG MIT EINEM DAMPFKOMPRESSIONSSYSTEM MIT EINER ENTSPANNUNGSTURBINE
SYSTÈMES DE CONTRÔLE ENVIRONNEMENTAL POUR AÉRONEF AYANT UN SYSTÈME DE COMPRESSION DE VAPEUR AVEC UNE TURBINE À DÉTENTE DE LIQUIDE

(30) Priority: 23.02.2024 US 202418585780
(43) Date of publication of application: 27.08.2025
(73) Proprietor: Hamilton Sundstrand Corporation, Charlotte, NC 28217-4578 (US)
(72) Inventor: KILCHYK, Viktor, Lancaster, NY (US); ERNST, Jeffrey, Wethersfield, CT (US)
(74) Representative: Dehns

(56) References cited:
- EP-A1- 2 889 558
- EP-A2- 2 272 757
- US-A1- 2017 058 773
- US-A1- 2019 359 339

## Description

### BACKGROUND

Embodiments described herein are directed to environmental control systems (ECS) for an aircraft and more specifically to an ECS having a vapor compression system (VCS) with a flash liquid expander (FLE) turbine.

An ECS may include multiple air cycle machines (ACMs) to condition air bled from an engine or cabin air compressor (CAC) and which is directed toward a cabin of the aircraft. However, using an ACM to condition air can be inefficient. US 2019/359339 relates to an aircraft environmental control system.

### BRIEF SUMMARY

Disclosed is an environmental control system (ECS) of an aircraft for delivering ECS supply air to a cabin, the system comprising: an ECS controller; a first mixer that is operationally coupled to the ECS controller, the first mixer receives the ECS supply air; a first vapor cycle system (VCS) that is downstream of the first mixer and fluidly coupled to the first mixer, wherein, the first VCS includes: a first working fluid; a first compressor; a first condenser located downstream of the first compressor; a first turbine that is a flash liquid expander (FLE) turbine, located downstream of the first condenser, that receives the first working fluid as a liquid and outputs the first working fluid as a two-phase mixture; a first interconnecting shaft coupling the first compressor and the first turbine; and a first evaporator located downstream of the first turbine and upstream of the first compressor; and a second mixer located downstream of the first VCS and operationally coupled to the ECS controller, a bypass connected in parallel with the first VCS, between the first mixer and the second mixer, wherein, in operation: the ECS controller, in predetermined operational conditions, controls the first mixer to direct the ECS supply air to the second mixer via one or both of the first VCS and the bypass; and the second mixer directs the ECS supply air to the cabin.

In addition to one or more aspects of the system, or as an alternate, the first working fluid is refrigerant.

The system includes a first drive operationally coupled to the first compressor, and configured to operate in a first mode to drive the first compressor and in a second mode to be driven by the first turbine.

In addition to one or more aspects of the system, or as an alternate, the first VCS further includes a first auxiliary heat exchanger located between the first condenser and the first turbine and configured to cool air from an auxiliary heat source.

In addition to one or more aspects of the system, or as an alternate, the first VCS includes a second evaporator coupled in parallel with the first evaporator, between the first compressor and the first turbine; a first fan that is configured to direct cabin air to the second mixer via the second evaporator of the first VCS to condition the cabin air, and wherein the cabin air and the ECS supply air are isolated from each other in the first VCS.

In addition to one or more aspects of the system, or as an alternate, the system includes an air cycle machine (ACM), connected in parallel with the first VCS, between the first mixer and the second mixer, wherein, in operation: the ECS controller, in predetermined operational conditions, controls the first mixer to direct the ECS supply air to the second mixer via one or more of the first VCS, the bypass and the ACM; and the second mixer directs the ECS supply air to the cabin
In addition to one or more aspects of the system, or as an alternate, the ACM includes: an ACM compressor; an ACM turbine located downstream of the ACM compressor; an ACM interconnecting shaft coupling the ACM compressor and the ACM turbine, wherein, in operation: the ACM compressor receives the ECS supply air from the first mixer, compresses the ECS supply air, and directs the ECS supply air toward the ACM turbine; and the ACM turbine drives the ACM compressor and directs the ECS supply air toward the second mixer.

In addition to one or more aspects of the system, or as an alternate, the first VCS includes a second auxiliary heat exchanger located between the first condenser and the first turbine; and the second auxiliary heat exchanger is coupled to the ACM compressor and the ACM turbine, whereby the second auxiliary heat exchanger is configured to condition the ECS supply air.

In addition to one or more aspects of the system, or as an alternate, the ACM includes a RAM air heat exchanger coupled to the to the ACM compressor and the ACM turbine, to provide supplemental conditioning of the ECS supply air.

In addition to one or more aspects of the system, or as an alternate, the ACM further includes: an ACM drive operationally coupled to the ACM compressor, and configured to operate in a first mode to drive the ACM compressor and in a second mode to be driven by the ACM turbine.

In addition to one or more aspects of the system, or as an alternate, the system includes a second VCS, connected in parallel with the first VCS, between the first mixer and the second mixer, wherein, in operation: the ECS controller, in predetermined operational conditions, controls the first mixer to direct the ECS supply air to the second mixer via one or more of the first VCS, the bypass and the second VCS; and the second mixer directs the ECS supply air to the cabin.

In addition to one or more aspects of the system, or as an alternate, the second VCS includes: a second VCS working fluid; a second VCS compressor; a second VCS turbine located downstream of the second VCS compressor; a second VCS interconnecting shaft coupling the second VCS compressor and the second VCS turbine; and a second VCS evaporator located downstream of the second VCS turbine and upstream of the second VCS compressor, wherein, in operation: the ECS controller, in predetermined operational conditions, controls the first mixer to direct the ECS supply air to the second mixer via the one or more of the first VCS, the bypass and the second VCS where and the second VCS evaporator in the second VCS conditions the ECS supply air; and the second mixer directs the ECS supply air to the cabin.

In addition to one or more aspects of the system, or as an alternate, the second VCS turbine is an FLE turbine.

In addition to one or more aspects of the system, or as an alternate, the second VCS working fluid is refrigerant.

In addition to one or more aspects of the system, or as an alternate, the first VCS includes a third auxiliary heat exchanger located between the first condenser and the first turbine, and the third auxiliary heat exchanger is coupled to the second VCS compressor and the second VCS turbine, whereby the third auxiliary heat exchanger is configured to condition the second VCS working fluid.

In addition to one or more aspects of the system, or as an alternate, the second VCS includes a second VCS condenser coupled to the to the second VCS compressor and the second VCS turbine, to provide supplemental conditioning of the second VCS working fluid.

In addition to one or more aspects of the system, or as an alternate, the second VCS further includes: a second VCS drive operationally coupled to the second VCS compressor, and configured to operate in a first mode to drive the second VCS compressor and in a second mode to be driven by the second VCS turbine.

In addition to one or more aspects of the system, or as an alternate, the first VCS includes a third evaporator coupled in parallel with the first evaporator and the second evaporator, between the first compressor and the first turbine; a second fan that is configured to direct cargo bay air from a cargo bay to the first VCS, for conditioning via the third evaporator, and back to the cargo bay, and wherein the cabin air, the ECS supply air and the cargo bay air are isolated from each other in the first VCS.

### BRIEF DESCRIPTION OF THE DRAWINGS

The subject matter which is regarded as the invention is particularly pointed out and distinctly claimed in the claims at the conclusion of the specification. The foregoing and other features and advantages of the invention are apparent from the following detailed description taken in conjunction with the accompanying drawings in which:
FIG. 1 shows an aircraft according to an embodiment;
FIG. 2 shows an ECS according to an embodiment, which includes a first regenerative vapor compression system (VCS) to condition air that is directed to a cabin;
FIG. 3 shows components of the first VCS, in which heat from an auxiliary system are utilized to heat a first working fluid entering a first turbine of the VCS, where the first turbine is flash liquid expander (FLE) turbine;
FIG. 4 shows an ECS according to an embodiment, which includes the first regenerative vapor compression system (VCS) and an air cycle machines (ACM) to condition air that is directed to a cabin;
FIG. 5 shows components of the first VCS and the ACM and their interactions, in which heat from the ACM and the auxiliary system are utilized to heat a first working fluid entering a first turbine of the VCS, where the first turbine is flash liquid expander (FLE) turbine;
FIG. 6 shows an ECS according to another embodiment, which includes the first VCS and a second VCS to condition air that is directed to a cabin;
FIG. 7 shows components of the first VCS and the second VCS and their interactions, in which heat from the second VCS and the auxiliary system are utilized to heat the first working fluid entering the first turbine of the VCS;
FIG. 8 shows an ECS according to another embodiment, which includes the first VCS and the ACM and in which the first VCS is configured to condition air directed to a cargo bay;
FIG. 9 shows components of the first VCS and the ACM and their interactions, in which heat from the ACM and the auxiliary system are utilized to heat the first working fluid entering the first turbine of the VCS.

### DETAILED DESCRIPTION

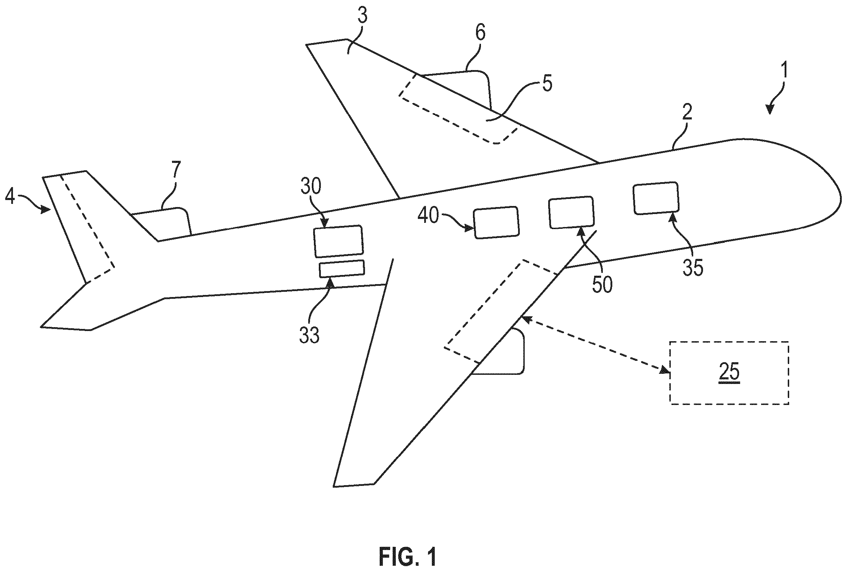

FIG. 1 shows an aircraft 1 having a fuselage 2 with a wing 3 and tail assembly 4, which may have control surfaces 5. The wing 3 may include an engine 6, such as a gas turbine engine, and an auxiliary power unit 7 may be disposed at the tail assembly 4. The aircraft 1 may have an air cycle machine 25, a cabin 30 over a cargo bay 33, an environmental control system (ECS) 35 that delivers ECS supply air 36 to the cabin 30. The aircraft may include a cabin air compressor (CAC) 40 and an auxiliary system (or auxiliary heat source) 50 such as aircraft electronics. The ECS 35 may receive the ECS supply air 36 from the engine 6 or the CAC 40, as nonlimiting examples.

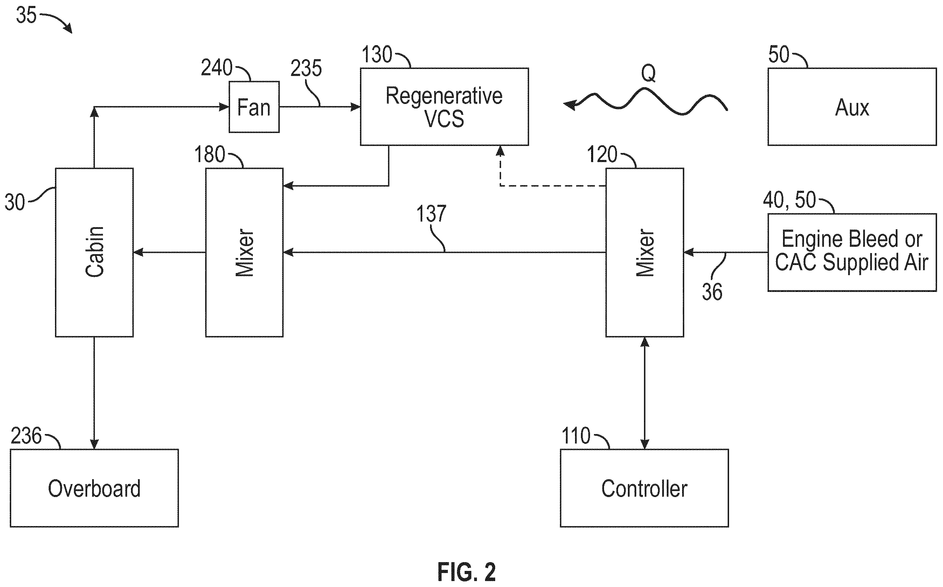

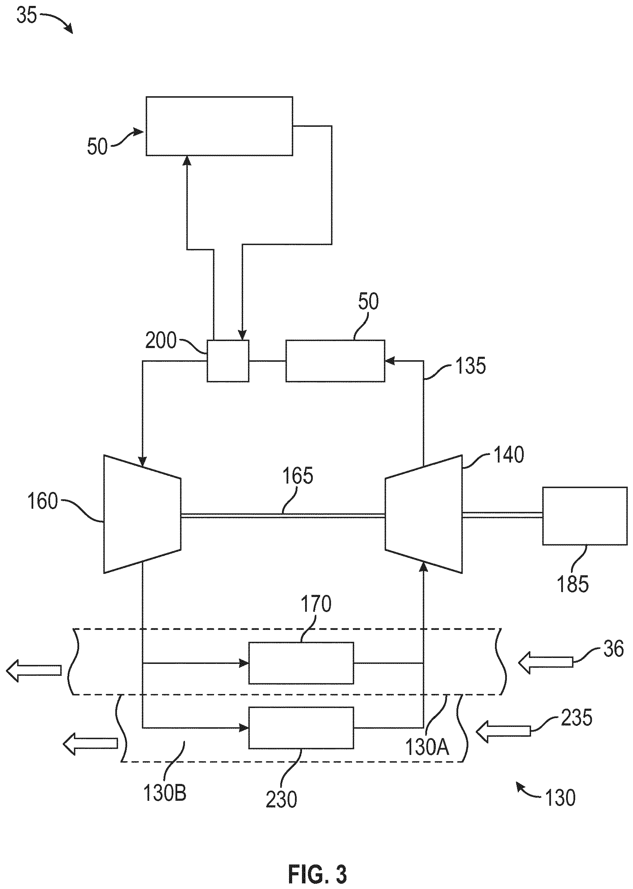

Turning to FIGS. 2 and 3, in one embodiment the ECS 35 includes an ECS controller 110. A first mixer 120 is operationally coupled to the ECS controller 110. The first mixer 120 receives the ECS supply air 36. A first vapor cycle system (VCS) 130 is downstream of the first mixer 120 and fluidly coupled to the first mixer 120.

The first VCS 130 includes a first working fluid 135 such as refrigerant. The first VCS 130 includes a first compressor 140, a first condenser 150 located downstream of the first compressor 140, and a first turbine 160 that is a flash liquid expander (FLE) turbine, located downstream of the first condenser 150. Utilization of the FLE turbine results in the VCS being a regenerative VCS. The first turbine 160 receives the first working fluid 135 as a liquid and outputs the first working fluid 135 as a two-phase mixture. A first interconnecting shaft 165 couples the first compressor 140 and the first turbine 160. A first evaporator 170 is located downstream of the first turbine 160 and upstream of the first compressor 140. A second mixer 180 is located downstream of the first VCS 130 and operationally coupled to the ECS controller 110. A bypass 137 is connected in parallel with the first VCS 130, between the first mixer 120 and the second mixer 180 (i.e., the bypass 137 is connected to the first mixer 120 and the second mixer 180).

A first drive 185 is operationally coupled to the first compressor 140. The first drive is configured to operate in a first mode to drive the first compressor 140, e.g., at startup of the ECS 35, and in a second mode to be driven by the first turbine 160, e.g., once the first turbine 160 is capable of driving the first compressor 140.

In one embodiment, the first VCS 130 may further include a first auxiliary heat exchanger 200 located between the first condenser 150 and the first turbine 160. The first auxiliary heat exchanger 200 is configured to cool and condition flow, which may also be refrigerant, from the auxiliary system 50. This heats the first working fluid 135 before it enters the first turbine 160, increasing its operational efficiency.

The first VCS 130 includes a second evaporator 230 coupled in parallel with the first evaporator 170, between the first compressor 140 and the first turbine 160. A first fan 240 is configured to direct cabin air 235 to the second mixer 180 via the second evaporator 230 of the first VCS 130 to condition the cabin air 235. The cabin air 235 and the ECS supply air 36 are isolated from each other in the first VCS 130, e.g., utilizing separate ducts 130A, 130B.

In operation, the ECS controller 110, in predetermined operational conditions, controls the first mixer 120 to direct the ECS supply air 36 to the second mixer 180 via one or both of the first VCS 130 and the bypass 137. This may depend on the required temperature at the cabin 30, which may be determined via a reference temperature measured at an inlet of the cabin 30. The second mixer 180 directs the ECS supply air 36 to the cabin 30. In conditions where cabin air is not being recycled, it may be sent overboard 236.

The use of a two-phase mixture increase the coefficient of performance (COP) for the ECS 35 by up to thirty percent (30%) compared with conditioning the ECS supply air 36 with air. Further, transferring heat from the auxiliary system 50 to the first working fluid 135 heats the first working fluid 135 as it approaches the first turbine 160, increasing its efficiency. The increased efficiency of the first turbine 160 enables it to efficiently cool airflow the ECS supply air 36 via the first evaporator 170 and the cabin air 235 via the second evaporator 230. In addition the first turbine 160 is capable of running the first drive 185 in a generator mode, and energy from such mode can be used to power aircraft systems.

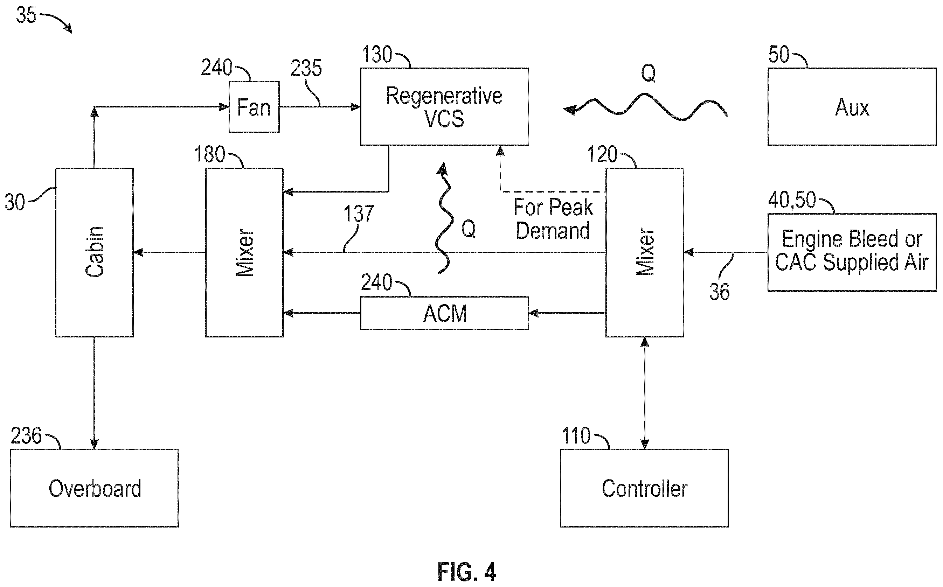

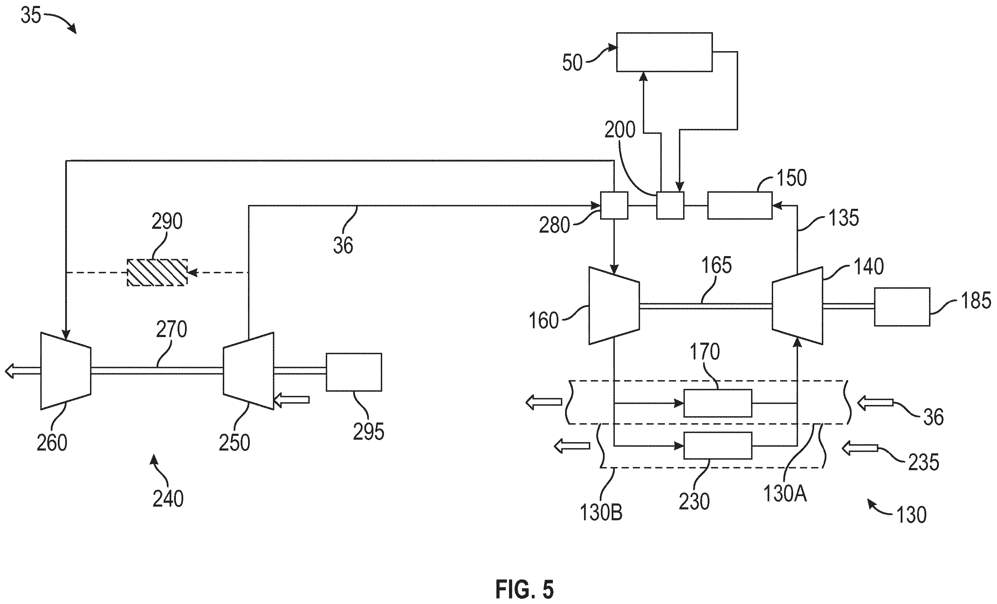

Turning to FIGS. 4 and 5, in one embodiment the ECS 35 includes the ECS controller 110. The first mixer 120 is operationally coupled to the ECS controller 110. The first mixer 120 receives the ECS supply air 36. The first VCS 130 is downstream of the first mixer 120 and fluidly coupled to the first mixer 120.

The first VCS 130 includes the first working fluid 135 such as refrigerant. The first VCS 130 includes the first compressor 140, the first condenser 150 located downstream of the first compressor 140, and the first turbine 160 that is a flash liquid expander (FLE) turbine, located downstream of the first condenser 150. Utilization of the FLE turbine results in the VCS being a regenerative VCS. The first turbine 160 receives the first working fluid 135 as a liquid and outputs the first working fluid 135 as a two-phase mixture. The first interconnecting shaft 165 couples the first compressor 140 and the first turbine 160. The first evaporator 170 is located downstream of the first turbine 160 and upstream of the first compressor 140. The second mixer 180 is located downstream of the first VCS 130 and operationally coupled to the ECS controller 110. The bypass 137 is connected in parallel with the first VCS 130, between the first mixer 120 and the second mixer 180.

The first drive 185 is operationally coupled to the first compressor 140. The first drive is configured to operate in the first mode to drive the first compressor 140, e.g., at startup of the ECS 35, and in the second mode to be driven by the first turbine 160, e.g., once the first turbine 160 is capable of driving the first compressor 140.

In one embodiment, the first VCS 130 may further include the first auxiliary heat exchanger 200 located between the first condenser 150 and the first turbine 160. The first heat exchanger 200 is configured to cool and condition flow, which may also be refrigerant, from the auxiliary system 50. This heats the first working fluid 135 before it enters the first turbine 160, increasing its operational efficiency.

The first VCS 130 includes the second evaporator 230 coupled in parallel with the first evaporator 170, between the first compressor 140 and the first turbine 160. The first fan 240 is configured to direct cabin air 235 to the second mixer 180 via the second evaporator 230 of the first VCS 130 to condition the cabin air 235. The cabin air 235 and the ECS supply air 36 are isolated from each other in the first VCS 130, e.g., utilizing separate ducts 130A, 130B, for avoiding cross-contamination.

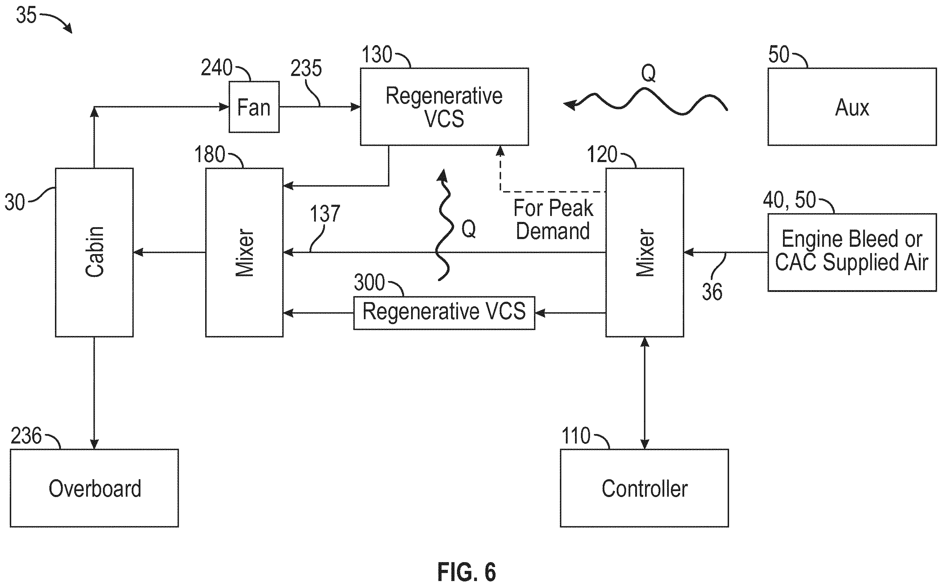

In the embodiment shown in FIGS. 5 and 6, an air cycle machine (ACM) 240 is connected in parallel with the first VCS 130, between the first mixer 120 and the second mixer 180. The ACM 240 includes an ACM compressor 250, an ACM turbine 260 located downstream of the ACM compressor 250, and an ACM interconnecting shaft 270 coupling the ACM compressor 250 and the ACM turbine 260. The ACM compressor 250 receives the ECS supply air 36 from the first mixer 120, compresses the ECS supply air 36, and directs the ECS supply air 36 toward the ACM turbine 260. The ACM turbine 260 drives the ACM compressor 250 and directs the ECS supply air 36 toward the second mixer 180.

The first VCS 130 includes a second auxiliary heat exchanger 280 located between the first condenser 150 and the first turbine 160. The second auxiliary heat exchanger 280 is coupled to the ACM compressor 250 and the ACM turbine 260. This further heats the first working fluid 135 before it enters the first turbine 160, further increasing its operational efficiency. From this configuration, the second auxiliary heat exchanger 280 is configured to condition an ECS supply air 36 while the evaporators 170, 230 selectively condition air to the cabin 30.

In one embodiment, the ACM 240 includes a RAM air heat exchanger 290 coupled to the to the ACM compressor 250 and the ACM turbine 260. The RAM air heat exchanger 290 provides supplemental conditioning of the ECS supply air 36.

An ACM drive 295 may be operationally coupled to the ACM compressor 250. The ACM drive 295 may operate in a first mode to drive the ACM compressor 250 and in a second mode to be driven by the ACM turbine 260, similarly to the first drive 185.

In operation, the ECS controller 110, in predetermined operational conditions, controls the first mixer 120 to direct the ECS supply air 36 to the second mixer 180 via one or more of the first VCS 130, the bypass 137 and the ACM 240. This may depend on the required temperature at the cabin 30, which may be determined via a reference temperature measured at an inlet of the cabin 30. The system 35 may be configured to utilize the ACM 240 as the primary source of conditioned air that is directed to the cabin 30. Air conditioned via the first VCS 130 may be utilized, e.g., during peak demand periods, and the first VCS 130 may be otherwise utilized to condition airflow through the ACM 240 and to condition flow for the auxiliary system 50. The second mixer 180 directs the ECS supply air 36 to the cabin 30. In conditions where cabin air is not being recycled, it may be sent overboard 236.

Utilizing the above configuration, the RAM air heat exchanger 290 is optionally not utilized and may be omitted. This is because the second auxiliary heat exchanger 280 in the first VCS 130 may effectively cool air flowing through the ACM 240. Sparingly utilizing a RAM air door, or not utilizing it at all, reduces aerodynamic inefficiencies, resulting in greater fuel efficiencies.

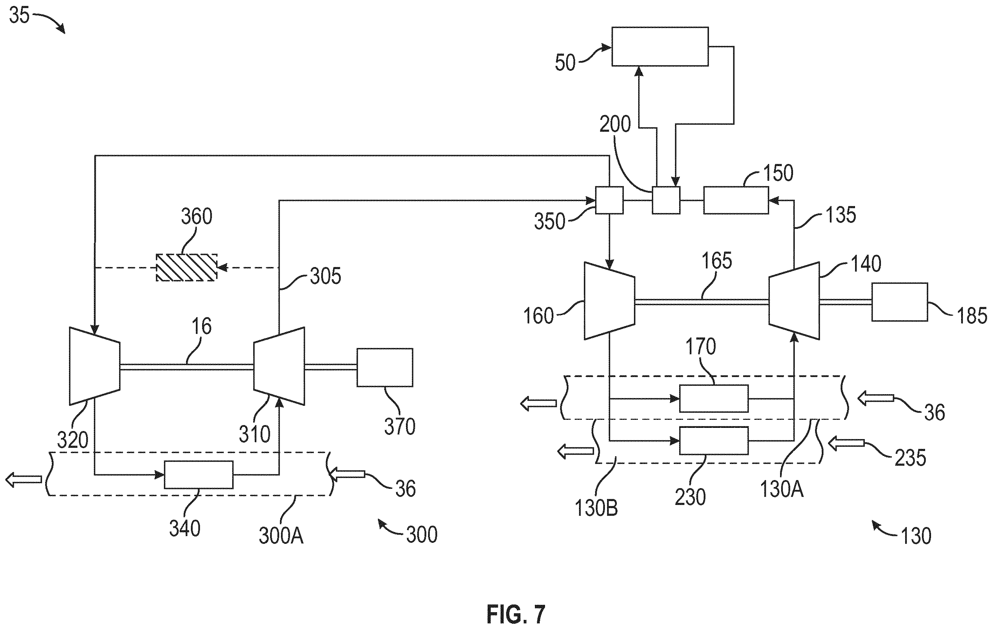

Turning to FIGS. 6 and 7, in one embodiment the ECS 35 includes the ECS controller 110. The first mixer 120 is operationally coupled to the ECS controller 110. The first mixer 120 receives the ECS supply air 36. The first vapor cycle system (VCS) 130 is downstream of the first mixer 120 and fluidly coupled to the first mixer 120.

The first VCS 130 includes the first working fluid 135 such as refrigerant. The first VCS 130 includes the first compressor 140, the first condenser 150 located downstream of the first compressor 140, and the first turbine 160 that is a flash liquid expander (FLE) turbine, located downstream of the first condenser 150. Utilization of the FLE turbine results in the VCS being a regenerative VCS. The first turbine 160 receives the first working fluid 135 as a liquid and outputs the first working fluid 135 as a two-phase mixture. The first interconnecting shaft 165 couples the first compressor 140 and the first turbine 160. The first evaporator 170 is located downstream of the first turbine 160 and upstream of the first compressor 140. The second mixer 180 is located downstream of the first VCS 130 and operationally coupled to the ECS controller 110. The bypass 137 is connected in parallel with the first VCS 130, between the first mixer 120 and the second mixer 180.

The first drive 185 is operationally coupled to the first compressor 140. The first drive is configured to operate in the first mode to drive the first compressor 140, e.g., at startup of the ECS 35, and in the second mode to be driven by the first turbine 160, e.g., once the first turbine 160 is capable of driving the first compressor 140.

In one embodiment, the first VCS 130 may further include the first auxiliary heat exchanger 200 located between the first condenser 150 and the first turbine 160. The first heat exchanger 200 is configured to cool and condition flow, which may also be refrigerant, from the auxiliary system 50.

The first VCS 130 includes the second evaporator 230 coupled in parallel with the first evaporator 170, between the first compressor 140 and the first turbine 160. The first fan 240 is configured to direct cabin air 235 to the second mixer 180 via the second evaporator 230 of the first VCS 130 to condition the cabin air 235. The cabin air 235 and the ECS supply air 36 are isolated from each other in the first VCS 130, e.g., utilizing separate ducts 130A, 130B, for avoiding cross-contamination.

In the embodiment of FIGS. 6 and 7, a second VCS 300 is connected in parallel with the first VCS 130, between the first mixer 120 and the second mixer 180. The second VCS 300 includes a second VCS working fluid 305, which may also be refrigerant, a second VCS compressor 310, and a second VCS turbine 320 located downstream of the second VCS compressor 310. The second VCS turbine 320 may also be an FLE turbine. A second VCS interconnecting shaft 330 couples the second VCS compressor 310 and the second VCS turbine 320. A second VCS evaporator 340 is located downstream of the second VCS turbine 320 and upstream of the second VCS compressor 310.

The first VCS 130 includes a third auxiliary heat exchanger 350 located between the first condenser 150 and the first turbine 160. The third auxiliary heat exchanger 350 is coupled to the second VCS compressor 310 and the second VCS turbine 320. From this configuration, the third auxiliary heat exchanger 350 is configured to condition the second VCS working fluid 305. This further heats the first working fluid 135 before it enters the first turbine 160, further increasing its operational efficiency.

In one embodiment, the second VCS 300 includes a second VCS condenser 360 coupled to the to the second VCS compressor 310 and the second VCS turbine 320. The second VCS 300 may provide supplemental conditioning of the second VCS working fluid 305. However, the second VCS condenser may be optional as the second VCS working fluid 305 is cooled via the first VCS 130.

A second VCS drive 380 may be operationally coupled to the second VCS compressor 310. The second VCS drive 380 may be configured to operate in a first mode to drive the second VCS compressor 310 and in a second mode to be driven by the second VCS turbine 320, similarly to the first drive 185.

In operation, the ECS controller 110, in predetermined operational conditions, controls the first mixer 120 to direct the ECS supply air 36 to the second mixer 180 via one or more of the first VCS 130, the bypass 137 and the second VCS 300. This may depend on the required temperature at the cabin 30, which may be determined via a reference temperature measured at an inlet of the cabin 30. The system 35 may be configured to utilize the second VCS 300 as the primary source of conditioned air that is directed to the cabin 30. That is, the first mixer 120 may direct the ECS supply air 36 to the second mixer 180 via a duct 300A surrounding the second VCS evaporator 340 in the second VCS 300. Air conditioned via the first VCS 130 may be utilized, e.g., during peak demand periods, and the first VCS 130 may be otherwise utilized to condition flow of the working fluid through the second VCS 300 and to condition flow for the auxiliary system 50. The second mixer 180 directs the ECS supply air 36 to the cabin 30. In conditions where cabin air is not being recycled, it may be sent overboard 236.

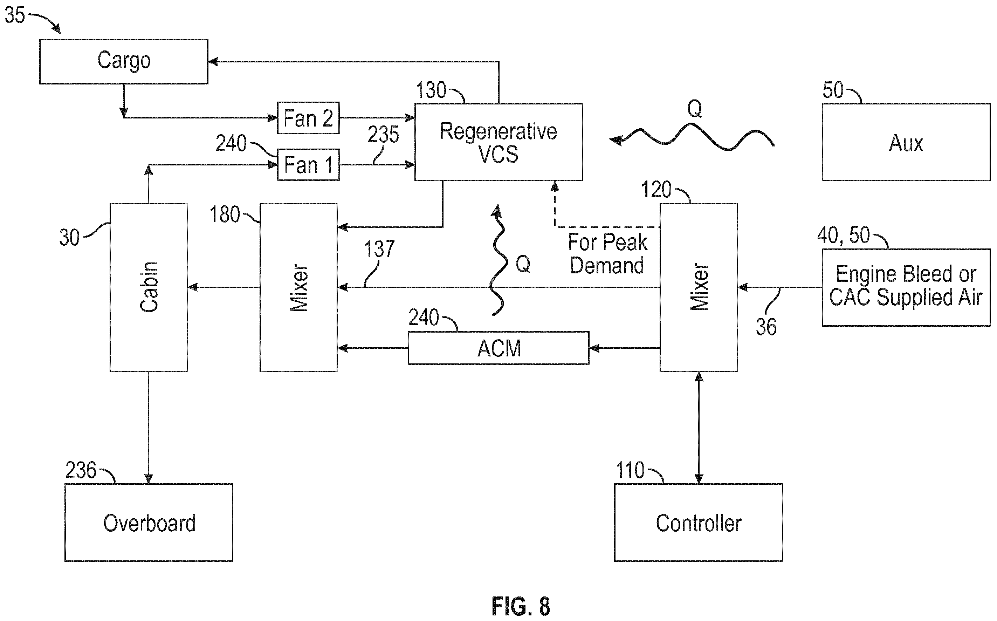

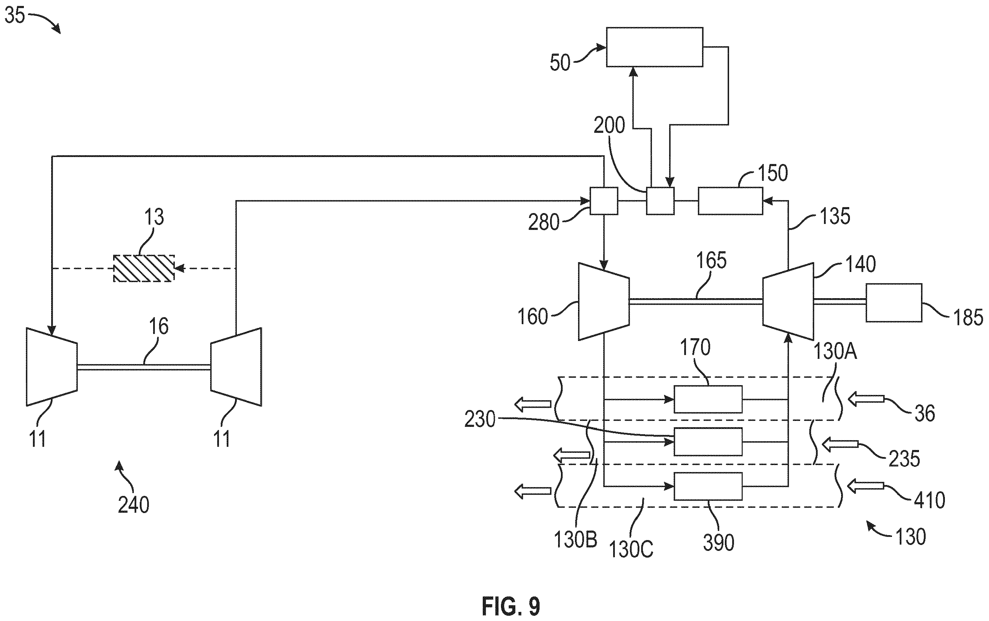

Turning to FIGS. 8 and 9, in one embodiment the ECS 35 includes the ECS controller 110. The first mixer 120 is operationally coupled to the ECS controller 110. The first mixer 120 receives the ECS supply air 36. The first vapor cycle system (VCS) 130 is downstream of the first mixer 120 and fluidly coupled to the first mixer 120.

The first VCS 130 includes the first working fluid 135 such as refrigerant. The first VCS 130 includes the first compressor 140, the first condenser 150 located downstream of the first compressor 140, and the first turbine 160 that is a flash liquid expander (FLE) turbine, located downstream of the first condenser 150. Utilization of the FLE turbine results in the VCS being a regenerative VCS. The first turbine 160 receives the first working fluid 135 as a liquid and outputs the first working fluid 135 as a two-phase mixture. The first interconnecting shaft 165 couples the first compressor 140 and the first turbine 160. The first evaporator 170 is located downstream of the first turbine 160 and upstream of the first compressor 140. The second mixer 180 is located downstream of the first VCS 130 and operationally coupled to the ECS controller 110. The bypass 137 is connected in parallel with the first VCS 130, between the first mixer 120 and the second mixer 180.

The first drive 185 is operationally coupled to the first compressor 140. The first drive is configured to operate in the first mode to drive the first compressor 140, e.g., at startup of the ECS 35, and in the second mode to be driven by the first turbine 160, e.g., once the first turbine 160 is capable of driving the first compressor 140.

In one embodiment, the first VCS 130 may further include the first auxiliary heat exchanger 200 located between the first condenser 150 and the first turbine 160. The first heat exchanger 200 is configured to cool and condition flow, which may also be refrigerant, from the auxiliary system 50.

The first VCS 130 includes the second evaporator 230 coupled in parallel with the first evaporator 170, between the first compressor 140 and the first turbine 160. The first fan 240 is configured to direct cabin air 235 to the second mixer 180 via the second evaporator 230 of the first VCS 130 to condition the cabin air 235. The cabin air 235 and the ECS supply air 36 are isolated from each other in the first VCS 130, e.g., utilizing separate ducts 130A, 130B, for avoiding cross-contamination.

The air cycle machine (ACM) 240 is connected in parallel with the first VCS 130, between the first mixer 120 and the second mixer 180. The ACM 240 includes the ACM compressor 250, an ACM turbine 260 located downstream of the ACM compressor 250, and the ACM interconnecting shaft 270 coupling the ACM compressor 250 and the ACM turbine 260. The ACM compressor 250 receives the ECS supply air 36 from the first mixer 120, compresses the ECS supply air 36, and directs the ECS supply air 36 toward the ACM turbine 260. The ACM turbine 260 drives the ACM compressor 250 and directs the ECS supply air 36 toward the second mixer 180.

The first VCS 130 includes the second auxiliary heat exchanger 280 located between the first condenser 150 and the first turbine 160. The second auxiliary heat exchanger 280 is coupled to the ACM compressor 250 and the ACM turbine 260. This further heats the first working fluid 135 before it enters the first turbine 160, further increasing its operational efficiency. From this configuration, the second auxiliary heat exchanger 280 is configured to efficiently condition an ECS supply air 36 while the evaporators 170, 230 selectively condition air to the cabin 30 and the cargo bay 33.

In one embodiment, the ACM 240 includes the RAM air heat exchanger 290 coupled to the to the ACM compressor 250 and the ACM turbine 260. The RAM air heat exchanger 290 provides supplemental conditioning of the ECS supply air 36.

The ACM drive 295 may be operationally coupled to the ACM compressor 250. The ACM drive 295 may operate in the first mode to drive the ACM compressor 250 and in the second mode to be driven by the ACM turbine 260, similarly to the first drive 185.

In the embodiment shown in FIGS. 8 and 9, the first VCS 130 includes a third evaporator 390 coupled in parallel with the first evaporator 170 and the second evaporator 230, between the first compressor 140 and the first turbine 160. A second fan 400 is configured to direct cargo bay air 410 from a cargo bay 33 to the first VCS 130, for conditioning via the third evaporator 390, and back to the cargo bay 33. The cabin air 235, and the ECS supply air 36 and the cargo bay air 410 are isolated from each other in the first VCS 130, e.g., via separate ducts 130A, 130B, 130C.

In operation, the ECS controller 110, in predetermined operational conditions, controls the first mixer 120 to direct the ECS supply air 36 to the second mixer 180 via one or more of the first VCS 130, the bypass 137 and the ACM 240. This may depend on the required temperature at the cabin 30, which may be determined via a reference temperature measured at an inlet of the cabin 30. The system 35 may be configured to utilize the ACM 240 as the primary source of conditioned air that is directed to the cabin 30. Air conditioned via the first VCS 130 may be utilized, e.g., during peak demand periods, and the first VCS 130 may be otherwise utilized to condition airflow through the ACM 240 and to condition flow for the auxiliary system 50. The second mixer 180 directs the ECS supply air 36 to the cabin 30. In conditions where cabin air is not being recycled, it may be sent overboard 236.

Utilizing the above configuration, the RAM air heat exchanger 290 is optionally not utilized and may be omitted. This is because the second heat exchanger 280 in the first VCS 130 may effectively cool air flowing through the ACM 240. Sparingly utilizing a RAM air door, or not utilizing it at all, reduces aerodynamic inefficiencies, resulting in greater fuel efficiencies. In addition, the efficiency of the first turbine 160 may be such that it is capable of selectively cooling air directed to the cabin and the cargo bay.

## Claims

1. An environmental control system, ECS, for an aircraft for delivering ECS supply air to a cabin, the system comprising:
an ECS controller (110);
a first mixer (120) that is operationally coupled to the ECS controller (110), the first mixer (120) receives the ECS supply air;
a first vapor cycle system, VCS (130), that is downstream of the first mixer (120) and fluidly coupled to the first mixer (120), wherein,
the first VCS (130) includes:
a first working fluid (135);
a first compressor (140);
a first condenser (150) located downstream of the first compressor (140);
a first turbine (160) that is a flash liquid expander, FLE, turbine, located downstream of the first condenser (150), that receives the first working fluid (135) as a liquid and outputs the first working fluid (135) as a two-phase mixture;
a first interconnecting shaft (165) coupling the first compressor (140) and the first turbine (160); and
a first evaporator (170) located downstream of the first turbine (160) and upstream of the first compressor (140); and
a second mixer (180) located downstream of the first VCS (130) and operationally coupled to the ECS controller (110),
a bypass (137) connected in parallel with the first VCS (130), between the first mixer (120) and the second mixer (180),
wherein, in operation:
the ECS controller (110), in predetermined operational conditions, controls the first mixer (120) to direct the ECS supply air to the second mixer (180) via one or both of the first VCS (130) and the bypass (137);
the second mixer (180) directs the ECS supply air to the cabin;
**characterized in that** the system further comprises:
a first drive (185) operationally coupled to the first compressor (140), and configured to operate in a first mode to drive the first compressor (140) and in a second mode to be driven by the first turbine (160).

2. The system of claim 1, wherein the first working fluid (135) is refrigerant.

3. The system of claim 1 or 2, wherein
the first VCS (130) further includes a first auxiliary heat exchanger located between the first condenser (150) and the first turbine (160) and configured to cool air from an auxiliary heat source.

4. The system of claim 3, wherein:
the first VCS (130) includes a second evaporator coupled in parallel with the first evaporator (170), between the first compressor (140) and the first turbine (160);
a first fan (240) that is configured to direct cabin air to the second mixer (180) via the second evaporator of the first VCS (130) to condition the cabin air, and
wherein the cabin air and the ECS supply air are isolated from each other in the first VCS (130).

5. The system of claim 4, wherein system further includes:
an air cycle machine, ACM (240), connected in parallel with the first VCS (130), between the first mixer (120) and the second mixer (180),
wherein, in operation:
the ECS controller (110), in predetermined operational conditions, controls the first mixer (120) to direct the ECS supply air to the second mixer (180) via one or more of the first VCS (130), the bypass (137) and the ACM; and
the second mixer (180) directs the ECS supply air to the cabin

6. The system of claim 5, wherein the ACM includes:
an ACM compressor (250);
an ACM turbine (260) located downstream of the ACM compressor (250);
an ACM interconnecting shaft (270) coupling the ACM compressor (250) and the ACM turbine (260),
wherein, in operation:
the ACM compressor (250) receives the ECS supply air from the first mixer (120), compresses the ECS supply air, and directs the ECS supply air toward the ACM turbine (260); and
the ACM turbine (260) drives the ACM compressor (250) and directs the ECS supply air toward the second mixer (180).

7. The system of claim 6, wherein:
the first VCS (130) includes a second auxiliary heat exchanger (280) located between the first condenser (150) and the first turbine (160); and
the second auxiliary heat exchanger (280) is coupled to the ACM compressor (250) and the ACM turbine (260), whereby the second auxiliary heat exchanger (280) is configured to condition the ECS supply air.

8. The system of claim 7, wherein:
the ACM includes a RAM air heat exchanger (290) coupled to the to the ACM compressor (250) and the ACM turbine (260), to provide supplemental conditioning of the ECS supply air; and/or wherein the ACM further includes:
an ACM drive (295) operationally coupled to the ACM compressor (250), and configured to operate in a first mode to drive the ACM compressor (250) and in a second mode to be driven by the ACM turbine (260).

9. The system of claim 4, wherein the system further includes:
a second VCS (300), connected in parallel with the first VCS (130), between the first mixer (120) and the second mixer (180),
wherein, in operation:
the ECS controller (110), in predetermined operational conditions, controls the first mixer (120) to direct the ECS supply air to the second mixer (180) via one or more of the first VCS (130), the bypass (137) and the second VCS (300); and
the second mixer (180) directs the ECS supply air to the cabin.

10. The system of claim 9, wherein the second VCS (300) includes:
a second VCS working fluid (305);
a second VCS compressor (310);
a second VCS turbine (320) located downstream of the second VCS compressor (310);
a second VCS interconnecting shaft (330) coupling the second VCS compressor (310) and the second VCS turbine (320); and
a second VCS evaporator (340) located downstream of the second VCS turbine (320) and upstream of the second VCS compressor (310),
wherein, in operation:
the ECS controller (110), in predetermined operational conditions, controls the first mixer (120) to direct the ECS supply air to the second mixer (180) via the one or more of the first VCS (130), the bypass (137) and the second VCS where and the second VCS evaporator (340) in the second VCS conditions the ECS supply air; and
the second mixer (180) directs the ECS supply air to the cabin.

11. The system of claim 10, wherein the second VCS turbine (320) is an FLE turbine.

12. The system of claim 10 or 11, wherein the second VCS working fluid (305) is refrigerant.

13. The system of any of claims 10-12, wherein:
the first VCS (130) includes a third auxiliary heat exchanger (350) located between the first condenser (150) and the first turbine (160), and
the third auxiliary heat exchanger (350) is coupled to the second VCS compressor (310) and the second VCS turbine (320), whereby the third auxiliary heat exchanger (350) is configured to condition the second VCS working fluid (305); and/or wherein:
the second VCS includes a second VCS condenser (360) coupled to the to the second VCS compressor (310) and the second VCS turbine (320), to provide supplemental conditioning of the second VCS working fluid (305); and/or wherein the second VCS further includes:
a second VCS drive (380) operationally coupled to the second VCS compressor (310), and configured to operate in a first mode to drive the second VCS compressor (310) and in a second mode to be driven by the second VCS turbine (320).

14. The system of claim 4, wherein:
the first VCS (130) includes a third evaporator (390), coupled in parallel with the first evaporator (170) and the second evaporator, between the first compressor (140) and the first turbine (160);
a second fan (400) that is configured to direct cargo bay air from a cargo bay to the first VCS (130), for conditioning via the third evaporator, and back to the cargo bay, and
wherein the cabin air, the ECS supply air and the cargo bay air are isolated from each other in the first VCS (130).

## Patentansprüche

1. Klimaregelungssystem, ECS, für ein Luftfahrzeug zum Liefern von ECS-Versorgungsluft an eine Kabine, wobei das System Folgendes umfasst:
eine ECS-Steuerung (110);
einen ersten Mischer (120), der betriebsmäßig mit der ECS-Steuerung (110) gekoppelt ist, der erste Mischer (120) empfängt die ECS-Versorgungsluft;
ein erstes Dampfkreislaufsystem, VCS (130), das stromabwärts des ersten Mischers (120) und fluidisch mit dem ersten Mischer (120) gekoppelt ist, wobei,
das erste VCS (130) Folgendes beinhaltet:
ein erstes Arbeitsfluid (135);
einen ersten Kompressor (140);
einen ersten Kondensator (150), der stromabwärts des ersten Kompressors (140) angeordnet ist;
eine erste Turbine (160), die eine Entspannungsturbine, FLE-Turbine, ist, die stromabwärts des ersten Kondensators (150) angeordnet ist, die das erste Arbeitsfluid (135) als eine Flüssigkeit empfängt und das erste Arbeitsfluid (135) als ein Zweiphasengemisch ausgibt;
eine erste Verbindungswelle (165), die den ersten Kompressor (140) und die erste Turbine (160) koppelt; und
einen ersten Verdampfer (170), der stromabwärts der ersten Turbine (160) und stromaufwärts des ersten Kompressors (140) angeordnet ist; und
einen zweiten Mischer (180), der stromabwärts des ersten VCS (130) angeordnet ist und betriebsmäßig mit der ECS-Steuerung (110) gekoppelt ist,
einen Bypass (137), der parallel zu dem ersten VCS (130) geschaltet ist,
zwischen dem ersten Mischer (120) und dem zweiten Mischer (180),
wobei im Betrieb:
die ECS-Steuerung (110) unter vorbestimmten Betriebsbedingungen den ersten Mischer (120) steuert, um die ECS-Versorgungsluft zu dem zweiten Mischer (180) über eines oder beides von dem ersten VCS (130) und dem Bypass (137) zu leiten;
der zweite Mischer (180) die ECS-Versorgungsluft in die Kabine leitet;
**dadurch gekennzeichnet, dass** das System ferner Folgendes umfasst:
einen ersten Antrieb (185), der betriebsmäßig mit dem ersten Kompressor (140) gekoppelt ist und konfiguriert ist, um in einem ersten Modus zu arbeiten, um den ersten Kompressor (140) anzutreiben, und in einem zweiten Modus, um von der ersten Turbine (160) angetrieben zu werden.

2. System nach Anspruch 1, wobei das erste Arbeitsfluid (135) Kältemittel ist.

3. System nach Anspruch 1 oder 2, wobei
das erste VCS (130) ferner einen ersten Hilfswärmetauscher beinhaltet, der zwischen dem ersten Kondensator (150) und der ersten Turbine (160) angeordnet ist und konfiguriert ist, um Luft von einer Hilfswärmequelle zu kühlen.

4. System nach Anspruch 3, wobei:
das erste VCS (130) einen zweiten Verdampfer beinhaltet, der parallel zu dem ersten Verdampfer (170) gekoppelt ist, zwischen dem ersten Kompressor (140) und der ersten Turbine (160);
ein erstes Gebläse (240), das konfiguriert ist, um Kabinenluft zu dem zweiten Mischer (180) über den zweiten Verdampfer des ersten VCS (130) zu leiten, um die Kabinenluft zu konditionieren, und
wobei die Kabinenluft und die ECS-Versorgungsluft in dem ersten VCS (130) voneinander isoliert sind.

5. System nach Anspruch 4, wobei System ferner Folgendes beinhaltet:
eine Luftkreislaufmaschine, ACM (240), die parallel zu dem ersten VCS (130) geschaltet ist, zwischen dem ersten Mischer (120) und dem zweiten Mischer (180),
wobei im Betrieb:
die ECS-Steuerung (110) unter vorbestimmten Betriebsbedingungen den ersten Mischer (120) steuert, um die ECS-Versorgungsluft zu dem zweiten Mischer (180) über eines oder mehrere von dem ersten VCS (130), dem Bypass (137) und der ACM zu leiten; und
der zweite Mischer (180) die ECS-Versorgungsluft in die Kabine leitet.

6. System nach Anspruch 5, wobei die ACM Folgendes beinhaltet:
einen ACM-Kompressor (250);
eine ACM-Turbine (260), die stromabwärts des ACM-Kompressors (250) angeordnet ist;
eine ACM-Verbindungswelle (270), die den ACM-Kompressor (250) und die ACM-Turbine (260) koppelt,
wobei im Betrieb:
der ACM-Kompressor (250) die ECS-Versorgungsluft von dem ersten Mischer (120) empfängt, die ECS-Versorgungsluft komprimiert und die ECS-Versorgungsluft zu der ACM-Turbine (260) hin leitet; und
die ACM-Turbine (260) den ACM-Kompressor (250) antreibt und die ECS-Versorgungsluft zu dem zweiten Mischer (180) hin leitet.

7. System nach Anspruch 6, wobei:
das erste VCS (130) einen zweiten Hilfswärmetauscher (280) beinhaltet, der zwischen dem ersten Kondensator (150) und der ersten Turbine (160) angeordnet ist; und
der zweite Hilfswärmetauscher (280) mit dem ACM-Kompressor (250) und der ACM-Turbine (260) gekoppelt ist, wobei der zweite Hilfswärmetauscher (280) konfiguriert ist, um die ECS-Versorgungsluft zu konditionieren.

8. System nach Anspruch 7, wobei:
die ACM einen Stauluft-Wärmetauscher (290) beinhaltet, der mit dem mit dem ACM-Kompressor (250) und der ACM-Turbine (260) gekoppelt ist, um eine ergänzende Konditionierung der ECS-Versorgungsluft vorzusehen; und/oder wobei die ACM ferner Folgendes beinhaltet:
einen ACM-Antrieb (295), der betriebsmäßig mit dem ACM-Kompressor (250) gekoppelt ist und konfiguriert ist, um in einem ersten Modus zu arbeiten, um den ACM-Kompressor (250) anzutreiben, und in einem zweiten Modus, um von der ACM-Turbine (260) angetrieben zu werden.

9. System nach Anspruch 4, wobei das System ferner Folgendes beinhaltet:
ein zweites VCS (300), das parallel zu dem ersten VCS (130) geschaltet ist, zwischen dem ersten Mischer (120) und dem zweiten Mischer (180),
wobei im Betrieb:
die ECS-Steuerung (110) unter vorbestimmten Betriebsbedingungen den ersten Mischer (120) steuert, um die ECS-Versorgungsluft zu dem zweiten Mischer (180) über eines oder mehrere von dem ersten VCS (130), dem Bypass (137) und dem zweiten VCS (300) zu leiten; und
der zweite Mischer (180) die ECS-Versorgungsluft in die Kabine leitet.

10. System nach Anspruch 9, wobei das zweite VCS (300) Folgendes beinhaltet:
ein zweites VCS-Arbeitsfluid (305);
einen zweiten VCS-Kompressor (310);
eine zweite VCS-Turbine (320), die stromabwärts des zweiten VCS-Kompressors (310) angeordnet ist;
eine zweite VCS-Verbindungswelle (330), die den zweiten VCS-Kompressor (310) und die zweite VCS-Turbine (320) koppelt; und
einen zweiten VCS-Verdampfer (340), der stromabwärts der zweiten VCS-Turbine (320) und stromaufwärts des zweiten VCS-Kompressors (310) angeordnet ist,
wobei im Betrieb:
die ECS-Steuerung (110) unter vorbestimmten Betriebsbedingungen den ersten Mischer (120) steuert, um die ECS-Versorgungsluft zu dem zweiten Mischer (180) über das eine oder die mehreren von dem ersten VCS (130), dem Bypass (137) und dem zweiten VCS zu leiten, wo und der zweite VCS-Verdampfer (340) in dem zweiten VCS die ECS-Versorgungsluft konditioniert; und
der zweite Mischer (180) die ECS-Versorgungsluft in die Kabine leitet.

11. System nach Anspruch 10, wobei die zweite VCS-Turbine (320) eine FLE-Turbine ist.

12. System nach Anspruch 10 oder 11, wobei das zweite VCS-Arbeitsfluid (305) Kältemittel ist.

13. System nach einem der Ansprüche 10-12, wobei:
das erste VCS (130) einen dritten Hilfswärmetauscher (350) beinhaltet, der zwischen dem ersten Kondensator (150) und der ersten Turbine (160) angeordnet ist, und
der dritte Hilfswärmetauscher (350) mit dem zweiten VCS-Kompressor (310) und der zweiten VCS-Turbine (320) gekoppelt ist, wobei der dritte Hilfswärmetauscher (350) konfiguriert ist, um das zweite VCS-Arbeitsfluid (305) zu konditionieren;
und/oder wobei:
das zweite VCS einen zweiten VCS-Kondensator (360) beinhaltet, der mit dem mit dem zweiten VCS-Kompressor (310) und der zweiten VCS-Turbine (320) gekoppelt ist, um eine ergänzende Konditionierung des zweiten VCS-Arbeitsfluids (305) vorzusehen; und/oder wobei das zweite VCS ferner Folgendes beinhaltet:
einen zweiten VCS-Antrieb (380), der betriebsmäßig mit dem zweiten VCS-Kompressor (310) gekoppelt ist und konfiguriert ist, um in einem ersten Modus zu arbeiten, um den zweiten VCS-Kompressor (310) anzutreiben, und in einem zweiten Modus, um von der zweiten VCS-Turbine (320) angetrieben zu werden.

14. System nach Anspruch 4, wobei:
das erste VCS (130) einen dritten Verdampfer (390) beinhaltet, der parallel zu dem ersten Verdampfer (170) und dem zweiten Verdampfer gekoppelt ist, zwischen dem ersten Kompressor (140) und der ersten Turbine (160);
ein zweites Gebläse (400), das konfiguriert ist, um Frachtraumluft aus einem Frachtraum zu dem ersten VCS (130) zu leiten, zur Konditionierung über den dritten Verdampfer, und zurück in den Frachtraum, und
wobei die Kabinenluft, die ECS-Versorgungsluft und die Frachtraumluft in dem ersten VCS (130) voneinander isoliert sind.

## Revendications

1. Système de contrôle environnemental, ECS, pour aéronef pour fournir de l'air d'alimentation ECS à une cabine, le système comprenant :
un dispositif de commande ECS (110) ;
un premier mélangeur (120) qui est couplé opérationnellement au dispositif de commande ECS (110), le premier mélangeur (120) recevant l'air d'alimentation ECS ;
un premier système à cycle de vapeur, VCS, (130), qui est en aval du premier mélangeur (120) et couplé fluidiquement au premier mélangeur (120), dans lequel,
le premier VCS (130) comporte :
un premier fluide de travail (135) ;
un premier compresseur (140) ;
un premier condenseur (150) situé en aval du premier compresseur (140) ;
une première turbine (160) qui est une turbine à détente de liquide, FLE, située en aval du premier condenseur (150), qui reçoit le premier fluide de travail (135) sous forme de liquide et délivre en sortie le premier fluide de travail (135) sous forme de mélange diphasique ;
un premier arbre d'interconnexion (165) couplant le premier compresseur (140) et la première turbine (160) ; et
un premier évaporateur (170) situé en aval de la première turbine (160) et en amont du premier compresseur (140) ; et
un second mélangeur (180) situé en aval du premier VCS (130) et couplé opérationnellement au dispositif de commande ECS (110),
une dérivation (137) connectée en parallèle avec le premier VCS (130),
entre le premier mélangeur (120) et le second mélangeur (180), dans lequel, en fonctionnement :
le dispositif de commande ECS (110), dans des conditions de fonctionnement prédéterminées, commande le premier mélangeur (120) pour diriger l'air d'alimentation ECS vers le second mélangeur (180) par l'intermédiaire de l'un ou des deux du premier VCS (130) et de la dérivation (137) ;
le second mélangeur (180) dirige l'air d'alimentation ECS vers la cabine ;
**caractérisé en ce que** le système comprend en outre :
un premier entraînement (185) couplé opérationnellement au premier compresseur (140), et configuré pour fonctionner dans un premier mode pour entraîner le premier compresseur (140) et dans un second mode pour être entraîné par la première turbine (160).

2. Système selon la revendication 1, dans lequel le premier fluide de travail (135) est un réfrigérant.

3. Système selon la revendication 1 ou la revendication 2, dans lequel :
le premier VCS (130) comporte en outre un premier échangeur de chaleur auxiliaire situé entre le premier condenseur (150) et la première turbine (160) et configuré pour refroidir de l'air provenant d'une source de chaleur auxiliaire.

4. Système selon la revendication 3, dans lequel :
le premier VCS (130) comporte un deuxième évaporateur couplé en parallèle avec le premier évaporateur (170), entre le premier compresseur (140) et la première turbine (160) ;
un premier ventilateur (240) configuré pour diriger de l'air de la cabine vers le second mélangeur (180) par l'intermédiaire du deuxième évaporateur du premier VCS (130) afin de conditionner l'air de la cabine, et
dans lequel l'air de la cabine et l'air d'alimentation ECS sont isolés l'un de l'autre dans le premier VCS (130).

5. Système selon la revendication 4, dans lequel le système comporte en outre :
un groupe turbo-refroidisseur, ACM (240), connecté en parallèle avec le premier VCS (130), entre le premier mélangeur (120) et le second mélangeur (180),
dans lequel, en fonctionnement :
le dispositif de commande ECS (110), dans des conditions de fonctionnement prédéterminées, commande le premier mélangeur (120) pour diriger l'air d'alimentation ECS vers le second mélangeur (180) par l'intermédiaire de l'un ou plusieurs du premier VCS (130), de la dérivation (137) et de l'ACM ; et
le second mélangeur (180) dirige l'air d'alimentation ECS vers la cabine.

6. Système selon la revendication 5, dans lequel l'ACM comporte :
un compresseur ACM (250) ;
une turbine ACM (260) située en aval du compresseur ACM (250) ;
un arbre d'interconnexion ACM (270) couplant le compresseur ACM (250) et la turbine ACM (260),
dans lequel, en fonctionnement :
le compresseur ACM (250) reçoit l'air d'alimentation ECS du premier mélangeur (120), comprime l'air d'alimentation ECS, puis dirige l'air d'alimentation ECS vers la turbine ACM (260) ; et
la turbine ACM (260) entraîne le compresseur ACM (250) et dirige l'air d'alimentation ECS vers le second mélangeur (180).

7. Système selon la revendication 6, dans lequel :
le premier VCS (130) comporte un deuxième échangeur de chaleur auxiliaire (280) situé entre le premier condenseur (150) et la première turbine (160) ; et
le deuxième échangeur de chaleur auxiliaire (280) est couplé au compresseur ACM (250) et à la turbine ACM (260), moyennant quoi le deuxième échangeur de chaleur auxiliaire (280) est configuré pour conditionner l'air d'alimentation ECS.

8. Système selon la revendication 7, dans lequel :
l'ACM comporte un échangeur de chaleur à air dynamique (290) couplé au compresseur ACM (250) et à la turbine ACM (260), pour fournir un conditionnement supplémentaire de l'air d'alimentation ECS ; et/ou dans lequel l'ACM comporte en outre :
un entraînement ACM (295) couplé opérationnellement au compresseur ACM (250), et configuré pour fonctionner dans un premier mode pour entraîner le compresseur ACM (250) et dans un second mode pour être entraîné par la turbine ACM (260).

9. Système selon la revendication 4, dans lequel le système comporte en outre :
un second VCS (300), connecté en parallèle avec le premier VCS (130), entre le premier mélangeur (120) et le second mélangeur (180),
dans lequel, en fonctionnement :
le dispositif de commande ECS (110), dans des conditions de fonctionnement prédéterminées, commande le premier mélangeur (120) pour diriger l'air d'alimentation ECS vers le second mélangeur (180) par l'intermédiaire de l'un ou plusieurs du premier VCS (130), de la dérivation (137) et du second VCS (300) ; et
le second mélangeur (180) dirige l'air d'alimentation ECS vers la cabine.

10. Système selon la revendication 9, dans lequel le second VCS (300) comporte :
un second fluide de travail VCS (305) ;
un second compresseur VCS (310) ;
une seconde turbine VCS (320) située en aval du second compresseur VCS (310) ;
un second arbre d'interconnexion VCS (330) couplant le second compresseur VCS (310) et la seconde turbine VCS (320) ; et
un second évaporateur VCS (340) situé en aval de la seconde turbine VCS (320) et en amont du second compresseur VCS (310),
dans lequel, en fonctionnement :
le dispositif de commande ECS (110), dans des conditions de fonctionnement prédéterminées, commande le premier mélangeur (120) pour diriger l'air d'alimentation ECS vers le second mélangeur (180) par l'intermédiaire de l'un ou plusieurs du premier VCS (130), de la dérivation (137) et du second VCS où et le second évaporateur VCS (340) dans le second VCS conditionne l'air d'alimentation ECS ; et
le second mélangeur (180) dirige l'air d'alimentation ECS vers la cabine.

11. Système selon la revendication 10, dans lequel la seconde turbine VCS (320) est une turbine FLE.

12. Système selon la revendication 10 ou la revendication 11, dans lequel le second fluide de travail VCS (305) est un réfrigérant.

13. Système selon l'une quelconque des revendications 10 à 12, dans lequel :
le premier VCS (130) comporte un troisième échangeur de chaleur auxiliaire (350) situé entre le premier condenseur (150) et la première turbine (160), et
le troisième échangeur de chaleur auxiliaire (350) est couplé au second compresseur VCS (310) et à la seconde turbine VCS (320), moyennant quoi le troisième échangeur de chaleur auxiliaire (350) est configuré pour conditionner le second fluide de travail VCS (305) ; et/ou dans lequel :
le second VCS comporte un second condenseur VCS (360) couplé au second compresseur VCS (310) et à la seconde turbine VCS (320), pour fournir un conditionnement supplémentaire du second fluide de travail VCS (305) ; et/ou dans lequel le second VCS comporte en outre :
un second entraînement VCS (380) couplé opérationnellement au second compresseur VCS (310), et configuré pour fonctionner dans un premier mode pour entraîner le second compresseur VCS (310) et dans un second mode pour être entraîné par la seconde turbine VCS (320).

14. Système selon la revendication 4, dans lequel :
le premier VCS (130) comporte un troisième évaporateur (390) couplé en parallèle avec le premier évaporateur (170) et le deuxième évaporateur, entre le premier compresseur (140) et la première turbine (160) ;
un second ventilateur (400) configuré pour diriger de l'air de soute d'une soute vers le premier VCS (130), pour son conditionnement par l'intermédiaire du troisième évaporateur, puis en retour vers la soute, et
dans lequel l'air de la cabine, l'air d'alimentation ECS et l'air de soute sont isolés l'un de l'autre dans le premier VCS (130).
